# EUROPEAN PATENT SPECIFICATION

(11) **EP 0 666 289 B1**
(45) Date of publication and mention of the grant of the patent: **11.10.2000**
(21) Application number: 95300404.1
(22) Date of filing: 24.01.1995
(51) Int. Cl.: C09B 69/10, G02B 1/04, D06P 1/52, D06P 1/382, D06P 3/34, G02C 7/04

(54) **Method for preparing dye useful for tinting contact lens**
Verfahren zur Herstellung eines zum Färben von Kontaktlinsen verwendbaren Farbstoffs
Procédé pour préparer un colorant utilisable pour colorer des lentilles de contact

(30) Priority: 24.01.1994 US 185747
(43) Date of publication of application: 09.08.1995
(73) Proprietor: JOHNSON & JOHNSON VISION PRODUCTS, INC., Jacksonville, Florida 32216-0995 (US)
(72) Inventor: Molock, Frank F., Orange Park, Florida 32073 (US); Ford, James D., Orange Park, Florida 32073 (US); Hill, Gregory A., Ponte Vedra Beach, Florida 32216 (US); Wood, Joe M., Jacksonville, Florida 32205 (US)
(74) Representative: Mercer, Christopher Paul

(56) References cited:
- EP-A- 0 072 353
- EP-A- 0 595 575
- WO-A-92/11407
- DE-A- 2 323 199
- US-A- 4 252 421
- DATABASE WPI Week 9101, Derwent Publications Ltd., London, GB; & JP 2 282 385 A

## Description

This invention relates to a method for imparting color to a contact lens. More specifically, it relates to an improved method for preparing a highly pure compound of a hydrophilic monomer and a dye.

The conventional method for imparting an evenly dispersed tint in a soft contact lens is described, for example, in U.S. 4,468,229. Generally, the lens is first soaked in an aqueous solution of the dye, and then the dye is bonded to the lens in a separate solution. The lens is typically composed of a hydrophilic polymer derived from the polymerization of hydrophilic monomers. The bonding of the dye to the lens is carried out by contacting the soaked lens with an aqueous base prior to the final hydration step, which is intended to provide the soft, hydrogel lens with the desired amount of water at an acceptable pH.

The dyes which are used in the conventional method are typically derived from a halotriazine such as a dihalotriazine or monohalotriazine, especially water-soluble dichlorotriazines. Dichlorotriazine or monohalotriazine dyes that carry sulfonate functionalities, for example, are soluble in water, so it is necessary that bonding occur with the hydrophilic polymer from which the lens is composed before the final hydration step. Otherwise, the dye could migrate within the lens to create an uneven dispersion, or leach out from the lens into the eye of the wearer.

The dye which imparts the tint to a soft lens made using the conventional method not only is dispersed in the lens, but also does not migrate within the lens or leach out of the lens after the bond has formed. The tinted lens is also stable in an aqueous medium and after repeated high temperature cycling, conditions which are present during routine wear and cleaning. The conventional method requires that the lens be soaked in a solution containing the dye which is at a specific concentration, and at a specific conductivity, so that the dye diffuses into the polymer. The conductivity is important since one may control the swelling of a lens by selecting various salt concentrations. It is also important that the dye concentration and time the lens stays in the dye soak be precisely controlled since the diffusion kinetics determine the intensity of the tinted contact lens. The conventional method employs a high concentration of dye in the dye wash so that the continuous tinting can be managed. Unfortunately, this method is cumbersome and requires multiple steps, especially at commercial scale production, because it is necessary to soak the lens in a solution of the dye at a specific concentration and time to create a dispersion of the dye in the lens. Therefore, because of this difficulty, alternative methods have been sought.

U.S. Patent 4,559,059 mentions that it might be possible to react a monomer such as 2-hydroxy ethyl methacrylate with a reactive dye prior to polymerization, and subsequently to polymerize the monomer dye units during polymerization of the monomers from which the lens is derived. However, this patent does not describe the method nor reaction conditions necessary to prepare the polymerizable monomer-dye units.

U.S. Patent 4,157,892 discloses adding a functionality to the polymer from which the lens is derived which is reactive with the dye. The functionalized polymer is prepared by reacting a "coupler monomer" with a conventional hydrophilic monomer. This coupler monomer has a high probability of changing the physical properties of the polymer. The lens prepared from the functionalized polymer is immersed in a solution of a diazonium dye, where the dye then bonds to the polymer. Although adequate bonding occurs, this method still requires immersion of the finished lens in a solution of the dye.

Another method for imparting color to a soft lens is disclosed in U.S. Patent 4,640,805. This patent describes preparing a tinted lens using a conventional spin casting technique. A suspension of dye pigment in liquid monomer is applied to the mold surface prior to polymerization of bulk monomer in the spin cast mold. Although this method provides a simple way for imparting color to the surface of the lens, it does require that the mold be stamped or printed with specific geometries and spacing.

Attempts have been made to incorporate the dye in the lens by polymerizing the hydrophilic monomer from which the lens is derived in the presence of the dye. For example, U.S. Patent 4,252,421 discloses polymerizing a hydrophilic monomer in the presence of a water-insoluble phthalocyanine dye. The dye is supposed to become entrapped in the finished, hydrated lens because of its incompatibility with water. Unfortunately, the dye will leach out of a lens derived from polymerizing the most commonly used hydrophilic monomer, hydroxyethylmethacrylate (HEMA), when the lens is fully hydrated to greater than about 40 weight percent water. This is even more of a problem with higher water content materials.

The '421 patent also discloses functionalizing the dye with a polymerizable vinyl group, and then subsequently bonding the functionalized dye during polymerization of the monomers from which the lens is derived. Although this eliminates the need for a post-bonding step, the water content of the lens is adversely affected unless hydrophilic -SO₃H or -SO₃Na groups are added to the phthalocyanine dye nucleus (as discussed at column 8 of the patent). This simply adds another burdensome step in the manufacturing process to make a contact lens suitable for extended wear applications.

In a similar manner, European Patent Application 0 396 376 discloses the use of a non-charged anthraquinone dye which is functionalized with a polymerizable group to facilitate bonding of the functionalized dye during polymerization of the hydrophilic monomer. Unfortunately, the non-charged dye leads to lower water solubility, if any at all, which in turn restricts the concentration of the dye which can be present in the lens. More importantly, however, the functionalized anthraquinone dye is by necessity a difunctional dye in this case. This difunctionality creates in effect a dye which is a crosslinker. As a result, the water content of the lens is further lowered, and lenses made with this difunctional dye are unacceptably brittle when the concentration of the dye in the lens is increased.

Finally, another attempt to impart color to a contact lens is disclosed in U.S. Patent 4,639,105. This patent discloses spin casting a mixture of liquid monomer, soluble dye and pigment particles to prepare a lens with variations in color achieved by migration of the pigment particles during spin casting. Although this patent indicates that the dyes do not migrate, no reference is made of what specific dyes are used, and it is believed that such dyes will indeed migrate or leach during wear unless the dye used is functionalized with polymerizable groups as described above. Furthermore, such a lens is unsuitable for those applications where a uniform dispersion of dye or colorant is necessary or desired.

A drawback with typical reactions for coupling a dye to a hydrophilic monomer unit stems from the impurity of the commercially available dyes typically used to dye contact lenses. These impurities range from high concentrations of inorganic salts to surfactants used as antidusting agents. Impurities are processing aids such as inorganic salts to speed dissolution of the dyes. The above components are added because the major application of these dyes are for the tinting of cellulosic textile materials. These additives make the reactive dye more functional in the textile processes. Synthetic impurities include dye precursors and reaction by products. These materials are not active and must be removed from the process waters before they can be discharged into municipal sewer systems. The usual result of reacting these dyes with a hydrophilic monomer is a very low yield of monofunctional monomer-dye units. Thus, it is an object of the present invention to provide a highly purified monomer-dye unit. It is also an object of the invention to provide a method for making a highly purified monomer-dye unit.

In view of the deficiencies of the prior art, an economical method is needed to prepare a tinted contact lens without requiring the step of immersing the finished lens in a solution of the dye.

The invention is an improved method for preparing polymerizable monomer-dye compounds that subsequently can be polymerized with the monomers from which a soft hydrogel contact lens is made. The improvement comprises reacting the dye with the hydrophilic monomer under conditions effective to prepare a polymerizable monofunctional dye of high purity.

According to the present invention there is provided a method of preparing a monomer-dye compound, comprising the steps of:
forming an aqueous solution comprising water, and water-soluble reagents, said reagents comprising water-soluble hydrophilic monomer, water-soluble base, and water-soluble dye selected from the group comprising halotriazine dyes and vinyl-sulfone dyes, the molar amount of base being greater than or equal to the molar amount of dye;
reacting said water-soluble dye with said water-soluble hydrophilic monomer to form a monomer-dye compound; and
separating said monomer-dye compound from said solution comprising said water-soluble reagents;
excluding forming an aqueous solution comprising water, 0.1M hydroxyethyl methacrylate, 0.127M potassium carbonate and 0.08M 1-amino-4(3-(4,6-dichloro-s-triazin-2-yl) amino) -4-sulfoanilino)-9, 10-dihydro-9,10-dioxo.

The present method can produce a monomer-dye compound having a chromatographic purity of at least 85%. Preferably the monomer-dye compound has a chromatographic purity of 100%.

The high purity monofunctional dye can then be polymerized in the presence of a homogeneous solution of the monomers from which a soft hydrogel contact lens is made. The improved method of this invention eliminates the need to immerse the lens in an aqueous solution of the dye after polymerization of the hydrophilic monomer from which the finished lens is derived. Additionally, it is unnecessary to bond the dye to the lens after the lens is formed. This is so because the polymerization monofunctional dye is polymerized along with the hydrophilic monomers from which the soft hydrogel contact lens is made and therefore is an integral part of the polymer backbone of the lens.

The intensity of the tint in the lens can be controlled accurately depending on the concentration of the polymerizable monofunctional dye in the solution of hydrophilic monomer. Furthermore, the physical and optical properties of the tinted lens are essentially equivalent to the physical and optical properties of a corresponding lens without the incorporation of the dye. For example, handling characteristics, wearer comfort, and lens clarity are not sacrificed when the dye is incorporated into the lens using the improved method of this invention. Most significantly, the fact that it does not act as a crosslinking agent because of its predominant monofunctionality, allows for the incorporation of increased amounts of the dye in the lens without sacrificing the water content and handling characteristics, e.g. flexibility, of the lens.

The preferred class of halotriazine dyes for reaction with the hydrophilic monomer, 2-hydroxy methy acrylate are dihalotriazine dyes, especially dichlorotriazine dyes with at least one sulfonate functionality to render the dye water-soluble. Such dichlorotriazine dyes are described, for example, in U.S. Patent Nos. 4,559,059 and 4,891,046, each of which is incorporated by reference herein. The most preferred dichlorotriazine dye is Color Index Reactive Blue 4. Monochlorotriazine dyes with at least one sulfonate functionality such as Reactive Blue #2 can also be reacted with 2-hydroxy methacrylate into the lens material. The water soluble dyes which can be utilized in addition to Color Index Reactive Blue 4 include Procion Blue MRS; Fiber Reactive Brilliant Blue MRS; 2-anthracenesulfonic acid, 1-amino-4-(3-((4,6-dichloro-s-triazin-2-yl)amino)-4-sulfoanilino)-9,10-dihydro-9,10-dioxo, disodium salt; 2-anthracenesulfonic acid, 1-amino-4-(3-((4,6-dichloro-1,3,5-triazin-2-yl)amino)-4-sulfophenyl)amino)-9,10-dihydro-9,10-dioxo-, disodium salt; and 2-anthracenesulfonic acid, 1-amino-4-(3-((4,6-dichloro-s-triazin-2-yl)amino)-4-sulfoanilino)-9,10-dihydro-9,10-dioxo.

The conditions for reacting the water soluble halotriazine dye with the hydrophilic monomer in order to prepare a predominantly monofunctional dye will depend on the specific monomer chosen and the type of halotriazine dye used. These conditions can readily be determined empirically.

The polymerizable dye is highly monofunctional if as a result of the reaction not less than 50 percent of the polymerizable dye compounds formed have only one site of reactive functionality derived from the reaction of the dye with the hydrophilic monomer. If more than 50 percent of the polymerizable dye compounds were difunctional, then the dye would act as a crosslinker which may adversely affect the physical properties of the finished lens. Preferably, not less than 80 percent of the polymerizable dye compounds are monofunctional. Ideally, at least 95 percent of the polymerizable dye is monofunctional.

The reaction of the dye with the monomer advantageously occurs in the presence of a base which is capable of solubilizing the monomer and the dye. The molar amount of the base is equal to or greater than the molar amount of the dye. Preferably, the molar ratio of base to dye is about 2:1 or 3:1. More preferably, the molar ratio of base to dye is at least 2:1, even more preferably it is 3:1. The reaction can be driven faster to completion if an equimolar or molar excess of the monomer is added to the reaction mixture. The reaction temperature is preferably raised above room temperature, e.g. 35-70°C, for about 16-32 hours. When the reaction is complete, the mixture is preferably neutralized to pH of between 5-8. Any excess reactants, solvent and byproducts can be removed from the reactive dye compounds using conventional methods. The present method of attaching a dye as a pendant group on a hydrophilic monomer yields a hydrophilic monomer-dye unit having a chromtographic purity as high as 100 percent. A monomer-dye unit with a chromtographic purity of at least about 85 percent is preferable for use in tinting a contact lens.

The Lewis base solvent acts as an inert diluent for the reaction between the monomer and the dye. Examples of suitable solvents include pyridine, tetrahydrofuran (THF), and dimethylsulfoxide (DMSO). However, the preferred solvent is an aqueous base, preferably an alkali or alkaline earth metal carbonate, or phosphate.

As used herein, a soft hydrogel contact lens refers to a gel-like lens derived from polymerizing a monomeric composition containing a hydrophilic monomer. A hydrophilic monomer refers to any monomer which, when polymerized, yields a hydrophilic polymer capable of forming a hydrogel when contacted with water. Examples of hydrophilic monomers include, but are not limited to, hydroxy esters of acrylic or methacrylic acid, N,N dimethylacryamide (DMA), N-vinyl pyrrolidone (NVP), and styrene sulfonic acid, and other hydrophilic monomers known in the art. The subsequently formed polymeric lens is swollen with a significant amount of water to form the hydrogel lens, typically greater than 30 percent and preferably at least 65 percent water.

The preferred hydrophilic monomer is an hydroxy ester of acrylic or methacrylic acid. Examples of hydroxy esters of acrylic and methacrylic acid include, but are not limited to, hydroxyethylmethacrylate (HEMA) hydroxyethylacrylate (HEA), glycerylmethacrylate, hydroxypropylmethacrylate, hydroxypropylacrylate and hydroxytrimethyleneacrylate. The most preferred hydroxy ester of acrylic or methacrylic acid is HEMA, which is the monomer most commonly used in the preparation of soft hydrogel contact lenses. Preferably the amount of HEMA in the aqueous solution to form the present monomer dye compound is 10 to 65%, more preferably, 25 to 40% by weight.

The hydrophilic monomer is preferably copolymerized with comonomers in a monomer reaction mixture to impart specific improvements in chemical and physical properties, depending on the particular application desired. For example, the equilibrium water content of the lens can be increased if methacrylic acid (MAA) is used as a comonomer. Additionally, polyfunctional crosslinking monomers, such as ethylene glycol dimethacrylate (EGDMA) and trimethylolpropane trimethacrylate (TMPTMA), can be used as comonomers in relatively small amounts in the reaction mixture to improve the dimensional stability and other physical properties of the lens. Similarly, other components may be added for specific applications, for example, to impart UV absorbing properties to the lens.

The monomer reaction mixture also includes an initiator, usually from about 0.05 to 1 percent of a free radical initiator which is thermally activated. Typical examples of such initiators include lauroyl peroxide, benzoyl peroxide, isopropyl percarbonate, azobisisobutyronitrile and known redox systems such as the ammonium persulfate-sodium metabisulfite combination and the like. Irradiation by ultraviolet light, electron beam or a radioactive source may also be employed to initiate the polymerization reaction, optionally with the addition of a polymerization initiator, e.g. benzoin and its ethers.

The polymerization of the monomer reaction mixture is carried out after the mixture is contacted with the required amount of the polymerizable dye, and a homogeneous solution of the dye in the mixture is formed.

The amount of time required to form the homogeneous solution can be readily determined empirically.

The amount of polymerizable dye added to the reaction mixture is an amount of dye effective to impart the desired degree of tinting or coloring to the lens. This amount can be readily determined empirically, and will depend on the thickness of the periphery of the lens, the components of the reactive monomer mixture, as well as other factors.

Preferably, the improved method of this invention is used to impart a visibility or handling tint to the lens. This is an amount which enables a wearer to visibly notice the lens during handling if temporarily misplaced, but the amount should not be such that the colored periphery of the lens is easily distinguishable from the cornea of the wearer during use. The amount of polymerizable dye added to the homogeneous solution before polymerization to achieve a desired visibility tint will depend on the purity of the dye added to the solution and therefore it should be determined empirically. Generally, it should range from about 0.01 to about 0.35 percent based on the weight of the hydrophilic monomer, preferably from about 0.01 to about 0.20 weight percent. The most preferred range is from about 0.05 to about 0.15 percent.

Alternatively, the improved method of this invention offers the flexibility to impart an enhancement tint to the lens. An enhancement tint simply enhances the wearer's original eye color so that, for example, blue eyes will appear more "blue" with the enhancement tint on the lens. The amount of polymerizable dye added to the homogeneous solution for an enhancement tint desirably ranges from about 0.35 to about 0.75 percent based on the weight of the hydrophilic monomer, preferably from about 0.35 to about 0.50 percent. The polymerization can be carried out in the presence or absence of an inert diluent. If the polymerization is carried out in the absence of a diluent the resulting polymeric composition can be formed, as for example by lathe cutting, into the desired lens shape, and then swollen with the requisite amount of water following this operation. Alternatively, and more preferably, the polymerization is carried out in the presence of a suitable inert diluent. The preferred inert diluent is a water-displaceable boric acid ester. The characteristics of desired boric acid esters as well as the preferred concentration of ester in the polymerization reaction mixture is described in detail in U.S. Patent 4,680,336. The preferred methods for forming the desired lens when a diluent is used include centrifugal casting and cast molding, for example using molds described in U.S. Patent 4,565,348, as well as combinations of these methods with the other methods described generally herein.

When the polymerization reaction to prepare the lens is sufficiently complete, the lens can be hydrated to its equilibrium water content. Preferably, the water content of the lens will range from about 35 to about 80 weight percent, more preferably from about 55 to about 65 weight percent. This range is considered ideal for extended wear applications where patient comfort and handling characteristics are critical properties.

The following Examples are intended to illustrate the claimed invention.

The components used in the preparation of the contact lenses of the Example are abbreviated as follows: 2-hydroxyethyl methacrylate (HEMA), methacrylic acid (MAA), ethyleneglycol dimethacrylate (EGDMA), boric acid ester of glycerin (0.16 moles boron per mole of glycerin) (GBAE), an ethoxylated methylglucosidilaurate (MLE-80); Reactive Blue #4 [2-anthracenesulfonic acid, 1-amino-4-(3-(4,6-dichloro-s-triazin-2-yl)amino)-4-sulfoanilino)-9, 10-dihydro-9, 10-dioxo] (RB4) which is a dichlorotriazine dye, and α-hydroxy-α, α-dimethylacetophenone (Darocur 1173) which is a UV reactive initiator. The HEMA used in all of the examples is highly purified HEMA with less than 0.1 wt% impurities.

The test methods for determining the physical and optical properties set forth in Table 1 of the Example are as follows:

### Oxygen Permeability

The oxygen permeability through the lens is expressed as the Dk value multiplied by 10⁻¹¹, in units of cm•ml O₂/sec•ml•mm Hg. It is measured using a polarographic oxygen sensor consisting of a 4mm diameter gold cathode and silver-silver chloride ring anode.

### Tensile Properties (Modulus, Elongation and Strength)

The lens to be tested is cut to the desired specimen size and shape and the cross-sectional area measured. The specimen is then attached into the upper grip of a constant rate-of-crosshead-movement type of testing machine equipped with a load cell. The crosshead is lowered to the initial gauge length and the specimen attached to the fixed grip. The specimen is then elongated at a constant rate of strain and the resulting stress-strain curve is recorded. The elongation is expressed in percent and the tensile modulus and strength is expressed in Pa (pascal) (psi (pounds per square inch)).

### UV Transmission

This method is-applicable to the determination of light transmission through the lens. A beam of light (200-800nm) is passed through a quartz cell containing the lens in solution. The intensity of light exiting the cell is measured and ratioed against the incident (reference) beam. The values are expressed in % transmission.

### Tint Stability

The lens is sterilized in an autoclave for 30 mins and qualitatively compared to a non-autoclaved lens for loss of tint intensity. This procedure is repeated 5 times and a lens which does not lose tint intensity passes the test.

### EXAMPLE 1

### Reactive Dye RB4 Bound to HEMA:Synthesis 1

To a 500 ml round bottom flask is placed 350 ml of a 5% solution of K₂CO₃. To this is added 0.10 (13.0g) mole of HEMA, and the mixture is stirred for 10 minutes. To the above solution is added 0.08 (51.0g) mole of RB4. After the dye is fully dispersed, the temperature is raised between 40-50°C. The reaction is followed using the chromatographic HPLC method described in Hanggi et al, Analytical Biochemistry 149, 91-104 (1985), for monitoring the reaction of chlorotriazine dyes with monofunctional alcohols. Using this method, the formation of the monosubstituted monochlorotriazine - HEMA polymerizable dye is seen at approximately 42 minutes.

When sufficient conversion is achieved after 40-50 hours, the reaction mixture can be filtered and the filter cake collected and dried. This filter cake can be used "as is" to tint contact lenses. The filtrate can be vacuum stripped using a rotary evaporator to remove the water from the reaction product. The remaining blue powder can be used to tint lenses. The inorganic compound can be removed depending on the requirements of the tint. The conversion of the halotriazine can be increased by decreasing the amount of water in the reaction mixture. This would also increase the amount of the difunctional derivative of the dye.

### EXAMPLE 2

### Reactive Dye RB4 Bound to HEMA:Synthesis 2

The reaction described can be carried out in the following manner to afford approximately 85% pure monofunctional monochlorotriazine-HEMA polymerizable dye. Into a two liter three neck jacketed flask (the chiller temperature should have been set to 22°C before addition of reagents) equipped with mechanical agitation is placed 497.2g (27.62 moles) of water and 9.95g (0.0721 moles) of K₂CO₃(ACS grade, Aldrich # 20,261-9). This solution is allowed to equilibrate to 22°C before adding additional reagents. The reaction temperature should be monitored while reagents are being added. The pH of the above solution is maintained at 10-12. To this solution are added 497.2g (3.82 moles) of highly purified HEMA (0.1263%) EGDMA and 0.0275% MAA, as impurities, Rhom Tech Mhoromer BM-920); this mixture should be allowed to equilibrate to 22°C. A total of 76.5g (0.120 mole) RB#4 is added and the solution allowed to mix for thirty minutes or until all clumps have dissipated. The temperature of the reaction is raised to 40°C and the disappearance of the RB#4 peak is monitored by HPLC. When the RB#4 peak is less than 3% (approximately 170 hours) of the total chromophobic peak area the reaction mixture is neutralized with a dilute solution of HCl (40:1) until the pH is approximately 6.5 to 7.0. Stir for 30 minutes and filter. The filter cake is transferred from the Buchner funnel to a vacuum desiccator and allowed to dry. Mortar and pestle filters can optionally be washed with Et₂O, EtOH, acetone or CH₃OH to remove any organic impurities e.g., EGDMA, MAA or Ethylene Glycol.

### EXAMPLE 3

### Reactive Dye RB4 Bound to HEMA:Synthesis 3

To a one liter flask were added 76.5g reactive blue #4 and 450g deionized water. The contents were mixed 30 minutes at room temperature. To the flask was added 497.5g of hydroxyethylmethacrylate (HEMA). The contents were mixed 20 minutes. A solution of 12.7g of potassium carbonate in deionized water was then added. The contents were heated to 40°C for 96 hours. The mixture was neutralized with 2.5N sulfuric acid to a pH of 6.5. The contents of the flask were cooled to 5°C for 24 hours. The product was recovered by vacuum filtration. The moist solid was suspended in 100g of a solution of 50g deionized water and reagent (ethyl) alcohol. The product was recovered by vacuum filtration. The product of this washing was suspended in 100g of reagent (ethyl) alcohol and collected by vacuum filtration. This roduct was dried at room temperature at a vacuum of < 133.3 Pa (<1mm Hg).

The product of this synthesis yielded 19.9g of a blue powder which gave a single peak when analyzed by HPLC.

### EXAMPLE 4

### Reactive Dye RB4 Bound to HEMA:Synthesis 4

To a one liter flask were added 75g Reactive Blue #4 and 572.5g deionized water. The contents were mixed 30 minutes at room temperature. To the flask were added 187.5g of hydroxyethylmethacrylate (HEMA). The contents were mixed 20 minutes. To the solution were added llg of a 50% solution of sodium hydroxide. The contents were stirred at room temperature for one hour. The mixture was neutralized with 2.5N sulfuric acid to a pH of 6.5 The contents of the flask were cooled to 5°C for 24 hours. The product was recovered by vacuum filtration. The moist solid was suspended in 100g of a solution of 50g deionized water and reagent (ethyl) alcohol. The product was recovered by vacuum filtration. The product of this washing was suspended in 100g of reagent (ethyl) alcohol and collected by vacuum filtration. This product was dried at room temperature at a vacuum of 133.3 Pa (1mm Hg).

The product of this synthesis yielded 17.2g of a blue powder which gave a single peak when analyzed by HPLC.

### EXAMPLE 5

### Reactive Dye RB4 Bound to HEMA:Synthesis 5

To a 100ml flask was added 9.0g reactive black #5 (Remazol Black B, cas 17095-24-8) and 57.2g deionized water, the contents were mixed for 30 minutes at room temperature. To the flask was added 18.7g of hydroxy methylacrylate. The contents were mixed for 20 minutes. To the solution was added 1.04g of a 50% solution of sodium hydroxide. The contents were stirred at room temperature for 1 hour and 20 minutes. The mixture was neutralized with 2.5N sulfuric acid to a small Ph of 6.0. The contents of the flask were cooled to 5°C for 24 hours. The product was recovered by vacuum filtration. This product was dried at room temperature at a vacuum of less than lmm Hg. The product of this synthesis yielded 0.52g of a blue powder which gave a single peak when analyzed by HPLC.

### Preparation of Tinted Contact Lens with High Water Content

The following components are mixed to form a homogeneous blend: 58.08 parts HEMA, 0.71 parts EGDMA, 0.96 pacts MAA, 0.14 parts Darocur 1173, 0.07 parts of the polymerizable dye synthesized in Example 3, and 40 parts GBAE. The above blend is polymerized by exposure to UV light while being contained in a contact lens mold. The mold is opened after the polymerization is complete, the molded lens is submerged in either an aqueous solution of 0.50 percent MLE-80 or a 0.90% NaCl solution to which 0.50 percent MLE-80 has been added. The molds are put into the above solutions at a solution temperature between 60-70°C. The physical and optical properties of this tinted lens are shown in Table 1 as Example 1.

For comparison purposes, the physical and optical properties of an untinted lens, and a lens tinted using the conventional method, are shown in Table 1 as Control Examples A and B respectively. The untinted lens is prepared substantially identically to the method described above except no dye is used. The lens tinted using the conventional method is prepared by first soaking the untinted lens in a solution of RB4 containing 0.50 percent MLE-80, and then bonding the RB4 to the soaked lens by contact with aqueous base prior to final hydration.

**TABLE 1**

| Physical and Optical Properties of Tinted Contact Lenses | | | |
|---|---|---|---|
| Physical Properties | | | |
| Properties | Example 1 | Control Example A | Control Example B |
| Water Content % | 60 | 60 | 60 |
| Oxygen Permeability | 28 | 26 | 28 |
| Tensile Modulus, Pa (psi) | 248.21x10³ (36) | 248.21x10³ (36) | 234.42x10³ (34) |
| Elongation, % | 120 | 118 | 128 |
| Tensile Strength, Pa (psi) | 220.63x10³ (32) | 241.31x10³ (35) | 234.42x10³ (34) |

| Optical Properties | | | |
|---|---|---|---|
| UV Transmission Minimum % | 85 | 85 | 85 |
| Tint Stability | yes | -- | yes |

The results shown in Table 1 illustrate that the physical and optical properties of the tinted contact lens made according to the improved method of the invention are substantially the same as those properties for the corresponding untinted contact lens and the contact lens tinted by the conventional process.

## Claims

1. A method of preparing a monomer-dye compound, comprising the steps of:
forming an aqueous solution comprising water, and water-soluble reagents, said reagents comprising water-soluble hydrophilic monomer, water-soluble base, and water-soluble dye selected from the group comprising halotriazine dyes and vinyl-sulfone dyes, the molar amount of base being greater than or equal to the molar amount of dye;
reacting said water-soluble dye with said water-soluble hydrophilic monomer to form a monomer-dye compound; and
separating said monomer-dye compound from said solution comprising said water-soluble reagents;
excluding forming an aqueous solution comprising water, 0.1M hydroxyethyl methacrylate, 0.127M potassium carbonate and 0.08M 1-amino-4(3-(4,6-dichloro-s-triazin-2-yl) amino) -4-sulfoanilino)-9, 10-dihydro-9,10-dioxo.

2. The method of claim 1, wherein said water-soluble hydrophilic monomer is a hydroxy ester of acrylic or methacrylic acid.

3. The method of claim 2, wherein said hydrophilic monomer is 2-hydroxyethyl methacrylate (HEMA).

4. The method of claim 3, wherein the amount of 2-hydroxyethyl methacrylate (HEMA) in aqueous solution is 10 to 65%, preferably 25 to 40%, by weight.

5. The method of any one of claims 1 to 4, wherein the molar ratio of base to dye is at least 2:1, and is preferably 3:1.

6. The method of any one of claims 1 to 5, wherein the halotriazine dye is a dihalotriazine dye.

7. The method of any one of claims 1 to 6, wherein said dye is a dichlorotriazine dye with at least one sulfonate functionality.

8. The method of claim 6, wherein the dihalotriazine dye is 1-amino-4(3-(4,6-dichloro-s-triazin-2-yl) amino)-4-sulfoanilino)-9, 10-dihydro-9, 10-dioxo (Color Index Reactive Blue 4).

9. The method of any one of claims 1 to 8, wherein the monomer-dye compound has a chromatographic purity of at least 85%.

10. A method according to any one of claims 1 to 9, wherein the monomer-dye compound has a chromatographic purity of 100%.

## Patentansprüche

1. Verfahren zum Herstellen einer Monomerfarbstoffverbindung, welches die Schritte umfaßt:
- Bilden einer wässrigen Lösung, umfassend Wasser und wasserlösliche Reagenzien, wobei die Reagenzien wasserlösliches hydrophiles Monomer, wasserlösliche Base und wasserlöslichen Farbstoff, ausgewählt aus der Gruppe umfassend Halotriazin-Farbstoffe und Vinylsulfon-Farbstoffe, umfassen, wobei die molare Menge an Base größer oder gleich der molaren Menge an Farbstoff ist;
- Reagieren des wasserlöslichen Farbstoffs mit dem wasserlöslichen hydrophilen Monomer, um eine Monomerfarbstoffverbindung zu bilden; und
- Trennen der Monomerfarbstoffverbindung von der Lösung, welche die wasserlöslichen Reagenzien umfaßt;
- ausschließendes Bilden einer wässrigen Lösung, die Wasser, 0,1M Hydroxyethylmethacrylat, 0,127M Kaliumcarbonat und 0,08M 1-Amino-4(3-(4,6-dichlor-s-triacin-2-yl)amino)-4-sulfoanilino)-9,10-dihydro-9,10-dioxo umfaßt.

2. Verfahren nach Anspruch 1, dadurch gekennzeichnet, daß das wasserlösliche hydrophile Monomer ein Hydroxyester von Acryl- oder Methacrylsäure ist.

3. Verfahren nach Anspruch 2, dadurch gekennzeichnet, daß das hydrophile Monomer 2-Hydroxyethylmethacrylat (HEMA) ist.

4. Verfahren nach Anspruch 3, dadurch gekennzeichnet, daß die Menge an 2-Hydroxyethylmethacrylat (HEMA) in wässriger Lösung 10 bis 65 Gew.-%, bevorzugt 25 bis 40 Gew.-% ist.

5. Verfahren nach einem der Ansprüche 1 bis 4, dadurch gekennzeichnet, daß das Molverhältnis von Base zu Farbstoff wenigstens 2:1, bevorzugt 3:1 ist.

6. Verfahren nach einem der Ansprüche 1 bis 5, dadurch gekennzeichnet, daß der Halotriazin-Farbstoff ein Dihalotriazin-Farbstoff ist.

7. Verfahren nach einem der Ansprüche 1 bis 6, dadurch gekennzeichnet, daß der Farbstoff ein Dichlortriazin-Farbstoffmit wenigstens einer Sulfonat-Funktionalität ist.

8. Verfahren nach Anspruch 6, dadurch gekennzeichnet, daß der Dihalotriazin-Farbstoff 1-Amino-4(3-(4,6-dichlor-s-triacin-2-yl)amino-4-sulfoamilino)-9,10-dihydro-9,10-dioxo (Farbindex Reaktivblau 4) ist.

9. Verfahren nach einem der Ansprüche 1 bis 8 dadurch gekennzeichnet, daß die Monomerfarbstoffverbindung eine chromatographische Reinheit von wenigstens 85% aufweist.

10. Verfahren nach einem der Ansprüche 1 bis 9, dadurch gekennzeichnet, daß die Monomerfarbstoffverbindung eine chromatographische Reinheit von 100% aufweist.

## Revendications

1. Procédé pour la préparation d'un composé monomère-colorant, comprenant les étapes consistant:
à former une solution aqueuse comprenant de l'eau, et des réactifs hydrosolubles, lesdits réactifs comprenant un monomère hydrophile hydrosoluble, une base hydrosoluble, et un colorant hydrosoluble choisi dans le groupe comprenant les colorants halogénotriazine et les colorants vinylsulfone, la quantité molaire de base étant supérieure ou égale à la quantité molaire de colorant;
à faire réagir ledit colorant hydrosoluble avec ledit monomère hydrophile hydrosoluble pour former un composé monomère-colorant; et
à séparer ledit composé monomère-colorant d'avec ladite solution comprenant lesdits réactifs hydrosolubles;
en excluant la formation d'une solution aqueuse comprenant de l'eau, du méthacrylate d'hydroxyéthyle 0,1 M, du carbonate de potassium 0,127 M et du 1-amino-4(3-(4,6-dichloro-s-triazin-2-yl)amino)-4-sulfoanilino)-9,10-dihydro-9,10-dioxo 0,08 M.

2. Procédé selon la revendication 1, dans lequel ledit monomère hydrophile hydrosoluble est un hydroxy-ester de l'acide acrylique ou méthacrylique.

3. Procédé selon la revendication 2, dans lequel ledit monomère hydrophile est le méthacrylate de 2-hydroxyéthyle (HEMA).

4. Procédé selon la revendication 3, dans lequel la quantité de méthacrylate de 2-hydroxyéthyle (HEMA) dans une solution aqueuse est de 10 à 65%, de préférence de 25 à 40%, en poids.

5. Procédé selon l'une quelconque des revendications 1 à 4, dans lequel le rapport molaire base à colorant est au moins de 2:1, et est de préférence de 3:1.

6. Procédé selon l'une quelconque des revendications 1 à 5, dans lequel le colorant halogénotriazine est un colorant dihalogénotriazine.

7. Procédé selon l'une quelconque des revendications 1 à 6, dans lequel ledit colorant est un colorant dichlorotriazine avec au moins une fonctionnalité sulfonate.

8. Procédé selon la revendication 6, dans lequel le colorant dihalogénotriazine est le 1-amino-4-(3-(4,6-dichloro-s-triazin-2-yl)amino)-4-sulfoanilino)-9,10-dihydro-9,10-dioxo (Color Index Reactive Blue 4).

9. Procédé selon l'une quelconque des revendications 1 à 8, dans lequel le composé monomère-colorant possède une pureté chromatographique d'au moins 85%.

10. Procédé selon l'une quelconque des revendications 1 à 9, dans lequel le composé monomère-colorant possède une pureté chromatographique de 100%.
